# EUROPÄISCHE PATENTSCHRIFT

(11) **EP 2 081 779 B1**
(45) Veröffentlichungstag und Bekanntmachung des Hinweises auf die Patenterteilung: **10.08.2011**
(21) Anmeldenummer: 07818303.5
(22) Anmeldetag: 20.09.2007
(51) Int. Cl.: B60B 35/00, B60B 35/08

(54) **VERBINDUNGSSYSTEM ZUR VERBINDUNG EINES TRAGARMS MIT ACHSKÖRPER**
CONNECTION SYSTEM FOR CONNECTING A SUPPORTING ARM TO AN AXLE BODY
SYSTÈME DE JONCTION POUR JONCTION D'UN BRAS SUPPORT AVEC UN CORPS D'ESSIEU

(30) Priorität: 19.10.2006 DE 102006049390
(43) Veröffentlichungstag der Anmeldung: 29.07.2009
(73) Patentinhaber: SAF-HOLLAND GmbH, 63856 Bessenbach (DE)
(72) Erfinder: KOSCHINAT, Hubert B., 63768 Hösbach (DE)
(74) Vertreter: Bauer, Clemens
(86) Internationale Anmeldenummer: PCT/EP2007/008213
(87) Internationale Veröffentlichungsnummer: WO 2008/046488

(56) Entgegenhaltungen:
- EP-A- 1 508 459
- EP-A- 1 671 821
- WO-A-98/17487
- DE-A1- 19 946 802
- US-A- 4 497 504
- US-B1- 6 241 266

## Beschreibung

Die vorliegende Erfindung betrifft ein Verbindungssystem zur Verbindung eines Tragarms mit einem Achskörper, insbesondere eines Nutzfahrzeugs, sowie ein Fahrzeugachsensystem, ebenfalls insbesondere für ein Nutzfahrzeug.

Verbindungssysteme zur Verbindung eines Tragarms mit einem Achskörper sind beispielsweise aus der DE 199 46 802 A1 bekannt. Diese bestehen pro Fahrzeugseite aus je einer oberen Halbschale mit Ausgleichsformstücken sowie einer unteren Halbschale ohne Ausgleichsformstücke, die mit dem Achskörper in Fahrtrichtung gesehen hinten verschweißt sind und sich um den Achskörper derart erstrecken, daß die Kontaktstellen zwischen oberer und unterer Halbschale im wesentlichen horizontal angeordnet sind. Im Bereich der oberen Halbschale liegt formschlüssig ein Führungslenker auf den Ausgleichsformstücken auf und ist mittels einer entsprechend angepaßten Spannplatte sowie um den Achskörper erstreckenden U-Bügeln verspannt.

Problematisch bei derartigen Verbindungssystemen zur Verbindung eines Tragarms mit einem Achskörper ist jedoch, daß konstruktionsbedingt die Gefahr von schwellenden Eindrückungen des Achskörpers unter der Halbschale und einer Reibkorrosion auf dem Achsrohr aufgrund einer Relativbewegung zwischen Achsrohr und Halbschale bestehen.

Die EP 1 671 821 A1 betrifft einen mehrteiligen Tragarm, welcher an einer Achse angeordnet wird, indem er an diese angeschweißt wird.

Die US-6,241,266 B1 betrifft eine Fahrzeugachse, an welcher ein Bremsträger angeschweißt ist.

Die WO 98/174 87 betrifft einen Tragarm, welcher einen buchsenförmigen Bereich aufweist, in welchem eine Achse angeordnet ist und mit dem Tragarm verschweißt ist. Es ist somit Aufgabe der vorliegenden Erfindung, ein Verbindungssystem zur Verbindung eines Tragarms mit einem Achskörper, insbesondere eines Nutzfahrzeugs, sowie ein Fahrzeugachsensystem, insbesondere für Nutzfahrzeuge, vorzusehen, bei welchen die belastungsbedingten schwellenden Eindrückungen des Achsrohrs reduziert werden und gleichzeitig eine Reibkorrosion auf dem Achsrohr unterbunden wird.

Diese Aufgabe wird durch ein Verbindungssystem zur Verbindung eines Tragarms mit einem Achskörper, insbesondere eines Nutzfahrzeugs, mit den Merkmalen des Anspruchs 1 sowie durch ein Fahrzeugachsensystem, insbesondere für Nutzfahrzeuge, mit den Merkmalen des Anspruchs 12 gelöst. Bevorzugte Ausführungsformen ergeben sich aus den Unteransprüchen.

Erfindungsgemäß ist ein Verbindungssystem zur Verbindung eines Tragarms mit einem Achskörper, insbesondere eines Nutzfahrzeugs, vorgesehen, umfassend zumindest ein erstes und ein zweites Stützelement, welches jeweils einen Verstärkungsbereich aufweist, wobei das erste und zweite Stützelement derart am Achskörper anordenbar sind, daß diese den Achskörper im wesentlichen umschließen und die Kontaktbereiche zwischen dem ersten und zweiten Stützelement im wesentlichen vertikal angeordnet sind. Die Verstärkungsbereiche sind vorteilhafterweise als Auflager für den Tragarm ausgelegt, so daß die Verbindung zwischen Tragarm und Achskörper derart erfolgt, daß die vom Tragarm ausgeübte Kraft auf die Verstärkungsbereiche des ersten und zweiten Stützelements übertragen wird, welche ihrerseits wiederum die Kraft großflächig auf den Achskörper übertragen. Die Kraftübertragung von dem ersten und zweiten Stützelement auf den Achskörper erfolgt vorteilhafterweise mit einer geringen Flächenpressung, da das erste und zweite Stützelement den Achskörper großflächig, vorteilhafterweise im wesentlichen über dessen gesamten Umfang, kontaktieren bzw. berühren. Vorteilhafterweise sind das erste und zweite Stützelement derart am Achskörper anordenbar, daß die Kontaktbereiche zwischen dem ersten und zweiten Stützelement im wesentlichen vertikal angeordnet sind. In anderen Worten sind die Kontaktbereiche zwischen dem ersten und zweiten Stützelement derart anordenbar, daß diese im wesentlichen parallel zur Kraft- oder Belastungsrichtung des Verbindungssystems (d.h. der auf das Verbindungssystem ausgeübten Kraft) angeordnet sind. In anderen Worten erstrecken sich die Stützelemente vorteilhafterweise im eingebauten Zustand im wesentlichen vertikal. Infolgedessen sind das erste und zweite Stützelement - anders als im Stand der Technik - derart ausgelegt, daß diese im eingebauten Zustand in Fahrtrichtung gesehen vor und hinter dem Achskörper angeordnet sind. Daher können die Stützelemente bzw. Ausgleichsformstücke derart gestaltet werden, daß diese nicht nur die Auflageflächen für den Tragarm bzw. Lenker bilden, sondern auch das erforderliche Widerstandsmoment an der gefährdeten Stelle über dem Achsrohr aufweisen. Das Material der Stützelemente erstreckt sich somit im wesentlichen vertikal und bildet mit seinen vorteilhafterweise nach vorne und hinten weisenden Verstärkungsbereichen bzw. Verdickungen zweckmäßigerweise jeweils eine Art Brücke, welche die örtlichen Belastungen durch die Lenkerdurchbiegungen aufnimmt, ohne das/den darunter liegende(n) Achsrohr bzw. Achskörper wesentlich einzudrücken. Weiterhin vorteilhafterweise werden Relativbewegungen zwischen den Stützelementen und dem Achskörper und damit eine ungewünschte Reibkorrosion verhindert. Dies ist notwendig, da sich Tragarme, wie Fahrzeugfedern oder Führungslenker, von insbesondere luftgefederten Achssystemen bei Belastung schon innerhalb der Achseinspannteile (insbesondere im Scheitelbereich bzw. der Achsmitte des Achskörpers) biegen. Da aber der Tragarm mit seiner Materialdicke und damit seinem hohen Widerstandsmoment auf den im Vergleich hierzu relativ dünnen Achskörper drückt, besteht bei Ausführungsformen gemäß dem Stand der Technik die Gefahr, daß er dieses ungewünschterweise eindrückt. Dies erfolgt schwellend bei jeder wechselnden Belastung (wie z.B. Kurvenfahrt). Aufgrund dessen treten ebenfalls Relativbewegungen zwischen dem Achskörper und dem Tragelement bzw. dazwischenliegenden Elementen auf, was zu Reibkorrosion führen kann. Diese Problematik wird bei dem Verbindungssystem gemäß der Erfindung verhindert, da das erste und zweite Stützelement ausgebildet ist, die örtlichen Belastungen - insbesondere hervorgerufen durch die Tragarmdurchbiegungen - aufzunehmen, ohne den darunterliegenden Achskörper wesentlich einzudrücken.

Vorteilhafterweise sind die Kontaktbereiche zwischen erstem und zweitem Stützelement in einem Bereich bzw. Winkelbereich von im wesentlichen bis zu 40° um die senkrechte bzw. vertikale Symmetrieachse, vorzugsweise im wesentlichen bis zu 25° und besonders bevorzugt im wesentlichen bis zu 10°, angeordnet. In anderen Worten liegen die Kontaktbereiche vorteilhafterweise in Bezug auf die vertikale Symmetrieachse des Achskörpers in einem im wesentlichen senkrecht zur Längserstreckung des Achskörpers gesehenen Querschnitt in einem Winkelbereich, der sich von + 40° bis - 40° erstreckt, vorzugsweise im wesentlichen +/- 25° und besonders bevorzugt im wesentlichen bis zu ± 10°.

Bevorzugterweise sind die Verstärkungsbereiche des ersten und zweiten Stützelements in Form einer Vergrößerung der Querschnittsfläche ausgebildet. In anderen Worten sind die Verstärkungsbereiche derart ausgebildet, daß die Wand bzw. Wandung der Stützelemente in diesem Bereich verstärkt bzw. verdickt ist. Infolgedessen ist im Bereich der Verstärkungsbereiche eine Materialverstärkung vorgesehen. Bei Ausbildung der ersten und zweiten Stützelemente in Form einer Halbschale baucht das Stützelement im Bereich der Verstärkungsbereiche im wesentlichen nach außen aus. Zweckmäßigerweise ist die Wanddicke bzw. -stärke der Stützelemente im Verstärkungsbereich im wesentlichen zumindest doppelt, vorzugsweise zumindest im wesentlichen viermal dicker als in den übrigen Bereichen.

Zweckmäßigerweise weist die Querschnittsfläche der Verstärkungsbereiche eine im wesentlichen trapezförmige Konfiguration auf, deren sich verjüngender Bereich vorzugsweise nach außen ausgerichtet ist. Infolgedessen weist der verstärkte Wandbereich in einem Querschnitt, welcher im wesentlichen senkrecht zur Längserstreckung des Achskörpers liegt, eine sich verjüngende bzw. trapezförmige Konfiguration auf. Hierbei ist besonders vorteilhafterweise der sich verjüngende Bereich nach außen bzw. vom Achskörper weg und dem Tragarm zugewandt ausgerichtet.

Ferner zweckmäßigerweise weist die Querschnittsfläche der Verstärkungsbereiche eine im wesentlichen dreieckige Konfiguration auf, deren sich verjüngender Bereich vorzugsweise nach außen ausgerichtet ist. Infolgedessen weist der verstärkte Wandbereich in einem Querschnitt, welcher im wesentlichen senkrecht zur Längserstreckung des Achskörpers liegt, eine sich verjüngende bzw. eine im wesentlichen zu einem Endpunkt hin zulaufende Konfiguration auf. Hierbei ist besonders vorteilhafterweise der sich verjüngende Bereich nach außen bzw. vom Achskörper weg und dem Tragarm zugewandt ausgerichtet.

Bevorzugterweise weisen das erste und zweite Stützelement eine im wesentlichen gekrümmte Innenoberflächenkonfiguration auf, welche im wesentlichen komplementär bzw. formkomplementär zu einer im wesentlichen gekrümmten Außenoberflächenkonfiguration des Achskörpers ausgebildet ist. In anderen Worten sind das erste und zweite Stützelement vorteilhafterweise in seiner Innenoberfläche derart ausgebildet, daß sie zumindest teilweise im wesentlichen einen Formschluß mit der Außenoberfläche des Achskörpers eingehen können.

Weiterhin bevorzugt sind das erste und zweite Stützelement separat ausgebildet. In anderen Worten sind das erste und zweite Stützelement voneinander separate Elemente, so daß diese mehrteilig, vorzugsweise zweiteilig, ausgebildet sein können.

Alternativ sind das erste und zweite Stützelement einteilig bzw. einstückig, vorzugsweise in Form eines im wesentlichen zylinderförmigen Rohrs, ausgebildet. In anderen Worten werden das erste und zweite Stützelement durch ein einziges einteiliges bzw. einstückiges röhrenförmiges Element ausgebildet. Dies kann z.B. ein einteiliges, zu einem Rohr gerolltes Blech (ähnlich eines wraps) sein, welches zur Erhöhung des Widerstandsmoments zur Tragarmauflage hin verstärkt ausgebildet ist.

In einer weiteren bevorzugten Ausführungsform weist zumindest eines der Stützelemente ein Positionier- bzw. Montagemittel auf, welches ausgelegt ist, mit dem Tragarm form- und/oder kraftschlüssig in Eingriff zu stehen. Es wird somit ein Befestigungsmittel vorgesehen, mittels welchem zumindest eines der Stützelemente in Bezug auf den Achskörper und/oder den Tragarm positioniert werden kann. Dieses Befestigungsmittel kann alternativ oder zusätzlich ebenfalls als Montage- bzw. Arretierungs- bzw. Haltemittel ausgebildet sein, welches eine Relativverschiebung des Stützelements in Bezug auf den Achskörper verhindert. Das Befestigungsmittel kann mit dem mindestens einen Stützelement einstückig bzw. einteilig oder als separates Element ausgebildet sein.

Zweckmäßigerweise ist das Positionier- bzw. Montagemittel als Vorsprung ausgebildet, der ausgelegt ist, in einem vorzugsweise im wesentlichen formkomplementären Rücksprung des Tragarms einzugreifen. Der Vorsprung kann hierbei jede beliebige Konfiguration aufweisen. In einer besonders bevorzugten Ausführungsform weist er eine oder eine Vielzahl von im wesentlichen nach außen stehenden Nasen auf, mittels welchen eine noch genauere Positionierung des Stützelements in Bezug auf den Tragarm möglich ist.

Alternativ ist das Positionier- bzw. Montagemittel als separates Positionier- bzw. Montagemittel ausgebildet, welches ausgelegt ist, in einen vorzugsweise im wesentlichen formkomplementären Rücksprung des Tragarms und in einen vorzugsweise im wesentlichen formkomplementären Rücksprung zumindest eines der Stützelemente einzugreifen. In anderen Worten ist somit sowohl in dem Tragarm als auch in dem Stützelement ein vorzugsweise im wesentlichen zueinander fluchtender Rücksprung ausgebildet. Diese vorteilhafterweise aufeinanderliegenden bzw. fluchtenden Rücksprünge bilden somit im eingebauten Zustand einen Hohlraum aus, welcher vorteilhafterweise durch das Positionier- bzw. Montageelement ausgefüllt wird. Das Positionier- bzw. Montageelement kann beispielsweise eine kugelförmige bzw. sphärische Oberflächenkonfiguration aufweisen. Diese ist besonders vorteilhaft bei der Übertragung von großen Kräften. Es versteht sich, daß das separate Positionier- bzw. Montageelement ebenfalls eine beliebige andere Oberflächenkonfiguration aufweisen kann, beispielsweise als Bolzen oder Stift.

Weiterhin erfindungsgemäß ist ein Fahrzeugachsensystem, insbesondere für Nutzfahrzeuge, vorgesehen, umfassend einen Tragarm, einen Achskörper und ein erstes und ein zweites Stützelement, welche jeweils zumindest einen Verstärkungsbereich aufweisen, wobei der Tragarm über das erste und zweite Stützelement am Achskörper aufliegt und wobei das erste und zweite Stützelement derart am Achskörper angeordnet sind, daß diese den Achskörper im wesentlichen umschließen und die Kontaktbereiche zwischen erstem und zweitem Stützelement im wesentlichen vertikal ausgerichtet sind. Der Tragarm kann somit insbesondere als Längslenker, Federlenker bzw. -arm oder Blattfeder ausgebildet sein, welche sich vorzugsweise in Längsrichtung des Fahrzeugs erstrecken und den Achskörper im wesentlichen rechtwinklig kreuzen. Entsprechend kann der Achskörper als im wesentlichen rundes Rohr ausgebildet sein. Es versteht sich, daß der Achskörper in seinem Querschnitt ebenfalls eine eckige, vorzugsweise viereckige Konfiguration aufweisen kann. Vorteilhafterweise sind das erste und zweite Stützelement derart am Achskörper angeordnet, daß die Kontaktbereiche zwischen dem ersten und zweiten Stützelement im wesentlichen vertikal ausgerichtet sind. In anderen Worten sind die Kontaktbereiche zwischen dem ersten und zweiten Stützelement derart angeordnet, daß diese im wesentlichen parallel zur Kraft- oder Belastungsrichtung des Verbindungssystems (d.h. der auf das Verbindungssystem ausgeübten Kraft) ausgerichtet sind. In anderen Worten erstrecken sich die Stützelemente vorteilhafterweise im eingebauten Zustand im wesentlichen vertikal. Infolgedessen sind das erste und zweite Stützelement - anders als im Stand der Technik - derart ausgelegt, daß diese im eingebauten Zustand in Fahrtrichtung gesehen vor und hinter dem Achskörper angeordnet sind. Daher können die Stützelemente bzw. Ausgleichsformstücke derart gestaltet werden, daß diese nicht nur die Auflageflächen für den Tragarm bzw. Lenker bilden, sondern auch das erforderliche Widerstandsmoment an der gefährdeten Stelle über dem Achsrohr aufweisen. Das Material der Stützelemente erstreckt sich somit im wesentlichen vertikal und bildet mit seinen vorteilhafterweise nach vorne und hinten weisenden Verstärkungsbereichen bzw. Verdickungen zweckmäßigerweise jeweils eine Art Brücke, welche die örtlichen Belastungen durch die Lenkerdurchbiegungen aufnimmt, ohne das/den darunter liegende(n) Achsrohr bzw. Achskörper wesentlich einzudrücken. Weiterhin vorteilhafterweise werden Relativbewegungen zwischen den Stützelementen und dem Achskörper und damit eine ungewünschte Reibkorrosion verhindert.

Bevorzugterweise liegt der Tragarm lediglich an den Verstärkungsbereichen des ersten und zweiten Stützelements auf bzw. kontaktiert die Verstärkungsbereiche des ersten und zweiten Stützelements. Infolgedessen wird vorteilhafterweise verhindert, daß Spannungs- oder Belastungsspitzen am Scheitelbereich bzw. obersten Bereich des Achskörpers auftreten.

Weiterhin bevorzugterweise ist zumindest eines der ersten und zweiten Stützelemente mit dem Achskörper unter dem Kontaktbereich zwischen Stützelement und Tragarm verschweißt. Zusätzlich oder alternativ kann die Befestigung ebenfalls über ein Formstück erfolgen, welches einerseits in den Achskörper und andererseits in das Stützelement hineinragt.

Es versteht sich, daß die weiteren Vorteile und Merkmale des erfindungsgemäßen Verbindungssystems zur Verbindung eines Tragarms mit einem Achskörper ebenfalls in dem erfindungsgemäßen Fahrzeugachsensystem vorgesehen sein können.

Weitere Vorteile und Merkmale der vorliegenden Erfindung ergeben sich aus den nachfolgenden mit Bezug auf die in den Figuren beschriebenen beispielhaften Ausführungsformen, wobei einzelne Merkmale der dargestellten Ausführungsformen zu neuen Ausführungsformen kombiniert werden können. Es zeigen:
- Fig. 1: eine Querschnittsansicht des erfindungsgemäßen Verbindungssystems bzw. des erfindungsgemäßen Fahrzeugachsensystems gemäß einer ersten Ausführungsform der Erfindung.
- Fig. 2: eine Querschnittsansicht des erfindungsgemäßen Verbindungssystems bzw. des erfindungsgemäßen Fahrzeugachsensystems gemäß einer zweiten Ausführungsform der vorliegenden Erfindung.
- Fig. 3: eine Querschnittsansicht des erfindungsgemäßen Verbindungssystems bzw. des erfindungsgemäßen Fahrzeugachsensystems gemäß einer dritten Ausführungsform der vorliegenden Erfindung.
- Fig. 4a: eine Querschnittsansicht des erfindungsgemäßen Verbindungssystems bzw. des erfindungsgemäßen Fahrzeugachsensystems gemäß einer vierten Ausführungsform der Erfindung.
- Fig. 4b: eine Draufsicht auf das erfindungsgemäße Verbindungssystem gemäß der vierten Ausführungsform der Erfindung.

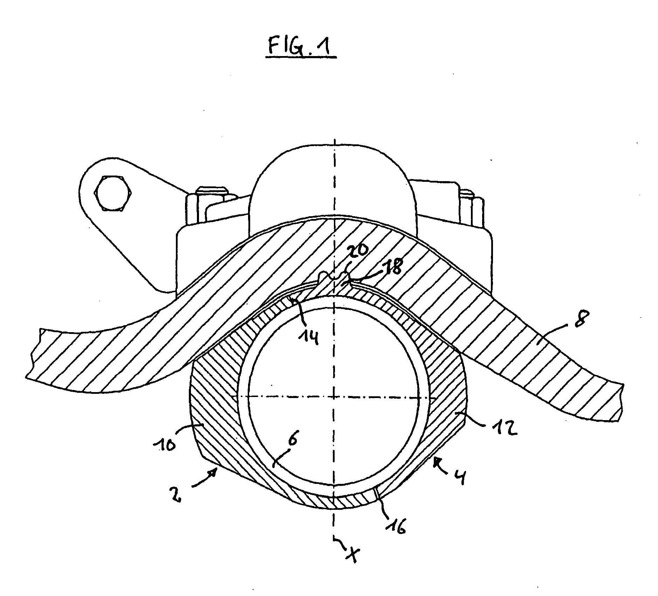

**Fig. 1** zeigt eine Querschnittsansicht einer ersten Ausführungsform des erfindungsgemäßen Verbindungssystems bzw. des erfindungsgemäßen Fahrzeugachsensystems. Der Querschnitt liegt hierbei im wesentlichen senkrecht zur Längserstreckung des Achsrohrs bzw. Achskörpers. Das Verbindungssystem umfaßt ein erstes Stützelement 2 sowie ein zweites Stützelement 4. Vorzugsweise ist das erste Stützelement 2 in Fahrtrichtung gesehen vor dem zweiten Stützelement 4 angeordnet. Das erste und zweite Stützelement 2,4 sind derart am Achskörper 6 angeordnet, daß diese den Achskörper 6 im wesentlichen umschließen. Schließlich weist das erfindungsgemäße Fahrzeugachsensystem einen Tragarm 8 auf, von welchem die Gewichtskraft des Fahrzeugs auf den Achskörper 6 übertragen wird.

Das erste und zweite Stützelement 2, 4 weisen jeweils einen Verstärkungsbereich 10, 12 auf. Der Verstärkungsbereich 10, 12 ist insbesondere in Form einer Vergrößerung der Querschnittsfläche, d.h. einer Wandverstärkung bzw. -verdickung ausgebildet. In der in Fig. 1 dargestellten Ausführungsform weisen die Verstärkungsbereiche 10, 12 eine im wesentlichen trapezförmige Konfiguration in ihrem senkrecht zur Längsachse des Achskörpers liegenden Querschnitt auf. Hierbei ist der sich verjüngende Bereich vorteilhafterweise derart angeordnet, daß dieser nach außen zeigt, d.h. vom Achskörper 6 weg und dem Tragarm 8 zugewandt ausgerichtet ist. in anderen Worten ragen die Verstärkungsbereiche 10, 12 entsprechend in Fahrzeuglängsrichtung gesehen nach hinten bzw. nach vorne, d.h. von der Achse des Achskörpers 6 weg.

Das erste und zweite Stützelement 2, 4 umschließen den Achskörper im wesentlichen. Infolgedessen kontaktieren sich das erste und zweite Stützelement 2, 4 an entsprechenden Kontaktbereichen 14, 16 im wesentlichen zumindest teilweise. Die Kontaktbereiche 14, 16 zwischen dem ersten und zweiten Stützelement 2, 4 sind im wesentlichen vertikal angeordnet. In anderen Worten ist die Verbindungslinie zwischen dem Kontaktbereich 14 und dem Kontaktbereich 16 im wesentlichen parallel oder in einem Winkel kleiner etwa 40°, vorzugsweise kleiner etwa 25° und besonders bevorzugterweise kleiner etwa 10° zu einer senkrechten Symmetrieachse X. Die senkrechte Symmetrieachse X entspricht in ihrer Ausrichtung im wesentlichen der vom Tragarm 8 auf den Achskörper 6 ausgeübten Kraft- bzw. Belastungsrichtung aufgrund des Gewichts des (Nutz-)fahrzeugs. Infolgedessen erstrecken sich das erste und zweite Stützelement 2, 4 im wesentlichen vertikal, so daß diese im wesentlichen vor und hinter dem Achskörper 6 in Fahrtrichtung gesehen angeordnet sind.

Der Tragarm 8 kann als Längslenker, Federlenker bzw. -arm oder Blattfeder ausgebildet sein, der sich in Längsrichtung des Fahrzeugs erstreckt und den Achskörper 6 im wesentlichen rechtwinklig kreuzt. Auf dem Tragarm 8 liegt im wesentlichen das Gewicht des Fahrzeugs auf. Dieses wird über das erste und zweite Stützelement 2, 4 auf den Achskörper 6 übertragen. Aufgrund der geometrischen Konfiguration der ersten und zweiten Stützelemente 2, 4 sowie insbesondere deren vertikalen Anordnung wird die vom Tragarm 8 an den Kontaktflächen zu dem ersten und zweiten Stützelement 2, 4 ausgeübte punktförmige Belastung in eine flächige Belastung auf den Achskörper 6 umgewandelt, da das erste und zweite Stützelement 2, 4 im wesentlichen flächig an dem Achskörper 6 anliegen. Dies ist gegeben, da die gekrümmte Innenoberflächenkonfiguration des ersten und zweiten Stützelements 2, 4 im wesentlichen formkomplementär zu der im wesentlichen gekrümmten Außenoberflächenkonfiguration des Achskörpers 6 ausgebildet ist. Aufgrund der Belastung neigt der Tragarm 8 dazu, sich durchzubiegen. Die Durchbiegung des Tragarms 8 führt zu einer weiteren punktuellen Belastung der darunter liegenden Elemente. Im Stand der Technik führt dies dazu, daß - aufgrund der unterschiedlichen Dickenverhältnisse von Stützelement und Tragarm (Widerstandsmoment des Tragarms ist ca. 10 mal höher als das von Stützelement und Achskörper zusammen) - der Tragarm auf das Stützelement und das darunter liegende Achsrohr drückt und dieses zu hoch belastet und dadurch sogar letztendlich deutlich eindrückt. Durch die Ausbildung von erstem und zweitem Stützelement 2, 4 mit Verstärkungsbereichen 10, 12 wird eine belastungsbedingte Eindrückung des Achsrohrs verhindert, da die Belastungsspitzen aufgrund der Durchbiegung des Tragarms 8 durch die Verstärkungsbereiche 10, 12 kompensiert werden.

In der dargestellten Ausführungsform weist das zweite Stützelement 4 ferner ein in Form eines Vorsprungs 18 ausgebildetes Positionier- bzw. Montagemittel auf. Der Vorsprung 18 ragt vom zweiten Stützelement 4 im wesentlichen nach außen in Richtung des Tragarms 8 hervor. In dem Tragarm 8 ist ein entsprechender vorzugsweise formkomplementärer Rücksprung vorgesehen, so daß der Vorsprung 18 - und damit das zweite Stützelement 4 - mit dem Tragarm 8 form- und/oder kraftschlüssig in Eingriff steht. Zur besseren Positionierung des zweiten Stützelements 4 weist der Vorsprung 18 noch zumindest eine Nase 20 auf. Es versteht sich, daß der Vorsprung 18 ebenfalls am ersten Stützelement 2 oder an beiden Stützelementen 2, 4 ausgebildet sein kann.

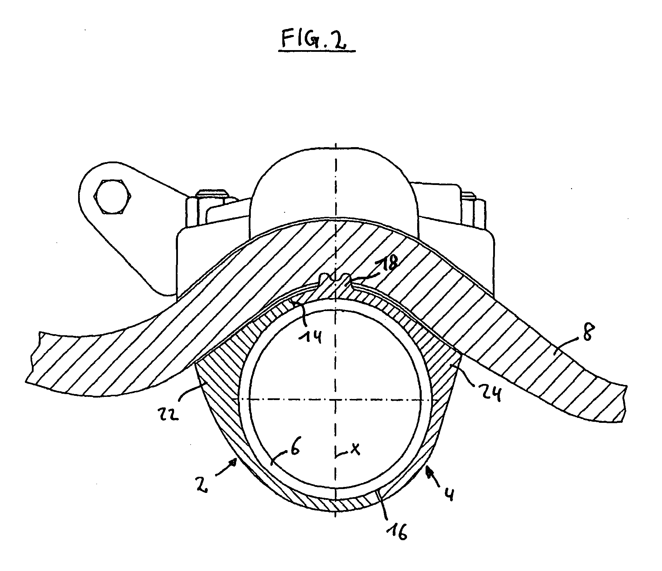

In **Fig. 2** ist eine weitere Ausführungsform des erfindungsgemäßen Verbindungssystems bzw. des erfindungsgemäßen Fahrzeugachsensystems dargestellt. Dieser unterscheidet sich insbesondere hinsichtlich der geometrischen Ausgestaltung der Verstärkungsbereiche. In dieser Ausführungsform weisen das erste und zweite Stützelement 2, 4 Verstärkungsbereiche 22, 24 auf, die in ihrem Querschnitt, der im wesentlichen senkrecht zur Längsrichtung des Achskörpers 6 liegt, eine im wesentlichen dreieckige Konfiguration besitzen. Der sich verjüngende Bereich der Verstärkungsbereich 22, 24 ist vorzugsweise nach außen orientiert. Infolgedessen ragt der sich verjüngende Bereich der Verstärkungsbereiche 22, 24 vom Achskörper 6 weg und ist vorteilhafterweise dem Tragarm 8 zugewandt.

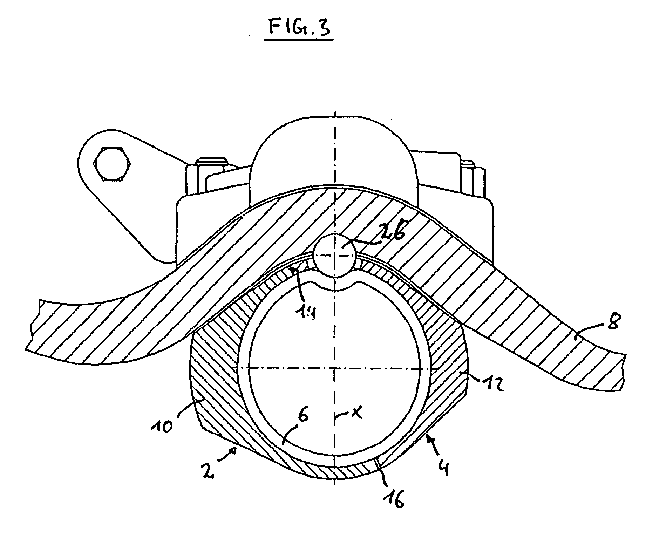

In **Fig. 3** ist eine weitere Ausführungsform dargestellt. Diese weist als Positionier- bzw. Montagemittel ein separates Positionier- bzw. Montageelement 26 auf. Das Positionier- bzw. Montageelement 26 greift in einen Rücksprung des Tragarms 8 sowie in einen in zumindest einem der Stützelemente 2, 4 vorgesehenen Rücksprung ein. Das Positionier- bzw. Montageelement 26 weist vorteilhafterweise eine kugelförmige bzw. sphärische Oberflächenkonfiguration auf. Es kann jedoch ebenfalls eine beliebig andere geometrische Konfiguration aufweisen, beispielsweise als Stift oder Bolzen ausgebildet sein. Hierdurch wird eine besonders vorteilhafte Lagesicherung des ersten bzw. zweiten Stützelements 2,4 gewährleistet.

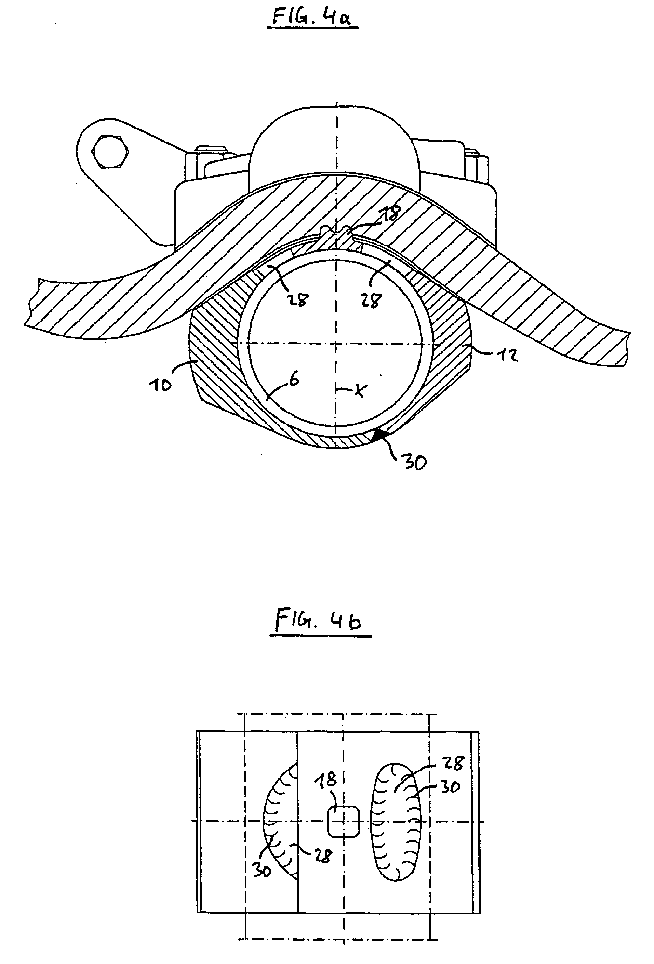

In den **Figs. 4a** und **4b** ist schließlich eine weitere Ausführungsform dargestellt. Das Verbindungssystem ist hierbei derart gestaltet, daß das erste und zweite Stützelement 2,4 einteilig bzw. einstückig ausgebildet sind. In anderen Worten wird das erste und zweite Stützelement 2,4 durch ein einziges, einstückiges Element ausgebildet. Dieses kann beispielsweise die Form eines im wesentlichen zylinderförmigen Rohres aufweisen, welches durch ein gerolltes Blech (ähnlich eines wraps) geschaffen wird. Dieses weist entsprechende Ausnehmungen 28 auf, über welche eine Verbindung zu dem Achskörper 6 mittels einer Schweißnaht 30 hergestellt werden kann.

### Bezugszeichenliste

- 2: erstes Stützelement
- 4: zweites Stützelement
- 6: Achskörper
- 8: Tragarm
- 10: Verstärkungsbereich
- 12: Verstärkungsbereich
- 14: Kontaktbereich
- 16: Kontaktbereich
- 18: Vorsprung
- 20: Nase
- 22: Verstärkungsbereich
- 24: Verstärkungsbereich
- 26: Positionier- bzw. Montageelement
- 28: Ausnehmung
- 30: Schweißnaht
- X: senkrechte Symmetrieachse

## Patentansprüche

1. Verbindungssystem zur Verbindung eines Tragarms (8) mit einem Achskörper (6), insbesondere eines Nutzfahrzeugs, umfassend
ein erstes und zweites Stützelement (2, 4), über welche der Tragarm (8) am Achskörper (6) aufliegen kann und welche jeweils einen Verstärkungsbereich (10, 12) aufweisen, der als Auflager für den Tragarm (8) ausgebildet ist, um die vom Tragarm (8) ausgeübte Kraft auf die Verstärkungsbereiche (10, 12) des ersten und zweiten Stützelements (2, 4) zu übertragen,
wobei das erste und zweite Stützelemente (2, 4) derart am Achskörper (6) anordenbar sind, dass diese den Achskörper (6) im wesentlichen umschließen und die Kontaktbereiche (14, 16) zwischen dem ersten und zweiten Stützelement (2, 4) im wesentlichen vertikal angeordnet sind.

2. Verbindungssystem nach Anspruch 1, wobei die Kontaktbereiche (14, 16) zwischen dem ersten und zweiten Stützelement (2, 4) in einem Bereich von im wesentlichen bis zu 40° um die senkrechte Symmetrieachse (X), vorzugsweise im wesentlichen bis zu 25° und besonders bevorzugt im wesentlichen bis zu 10°, angeordnet sind.

3. Verbindungssystem nach einem der vorhergehenden Ansprüche, wobei die Verstärkungsbereiche (10, 12) des ersten und zweiten Stützelements (2, 4) in Form einer Vergrößerung der Querschnittsfläche ausgebildet sind.

4. Verbindungssystem nach Anspruch 3, wobei die Querschnittsfläche der Verstärkungsbereiche (10, 12) eine im wesentlichen trapezförmige Konfiguration aufweist, deren sich verjüngender Bereich vorzugsweise nach außen ausgerichtet ist.

5. Verbindungssystem nach Anspruch 3, wobei die Querschnittsfläche der Verstärkungsbereiche (10, 12) eine im wesentlichen dreieckige Konfiguration aufweist, deren sich verjüngender Bereich vorzugsweise nach außen ausgerichtet ist.

6. Verbindungssystem nach einem der vorhergehenden Ansprüche, wobei das erste und zweite Stützelement (2, 4) eine im wesentlichen gekrümmte Innenoberflächenkonfiguration aufweisen, welche im wesentlichen formkomplementär zu einer im wesentlichen gekrümmten Außenoberflächenkonfiguration des Achskörpers (6) ausgebildet ist.

7. Verbindungssystem nach einem der vorhergehenden Ansprüche, wobei das erste und zweite Stützelement (2, 4) separat ausgebildet sind.

8. Verbindungssystem nach einem der Ansprüche 1-6, wobei das erste und zweite Stützelement (2, 4) einteilig bzw. einstückig, vorzugsweise in Form eines im wesentlichen zylinderförmigen Rohrs, ausgebildet sind.

9. Verbindungssystem nach einem der vorhergehenden Ansprüche, wobei zumindest eines der Stützelemente (4) ein Positionier- bzw. Montagemittel (18; 26) aufweist, welches ausgelegt ist, mit dem Tragarm (8) form- und/oder kraftschlüssig in Eingriff zu stehen.

10. Verbindungssystem nach Anspruch 9, wobei das Positionier- bzw. Montagemittel als Vorsprung (18) ausgebildet ist, der ausgelegt ist, in einen vorzugsweise im wesentlichen formkomplementären Rücksprung des Tragarms (8) einzugreifen.

11. Verbindungssystem nach Anspruch 9, wobei das Positionier- bzw. Montagemittel als separates Positionier- bzw. Montageelement (26) ausgebildet ist, welches ausgelegt ist, in einen vorzugsweise im wesentlichen formkomplementären Rücksprung des Tragarms (8) und in einen vorzugsweise im wesentlichen formkomplementären Rücksprung zumindest eines der Stützelemente (4) einzugreifen.

12. Fahrzeugachsensystem, insbesondere für Nutzfahrzeuge, umfassend einen Tragarm (8),
einen Achskörper (6) und
ein erstes und ein zweites Stützelement (2, 4), welches jeweils einen Verstärkungsbereich (10, 12) aufweisen, **dadurch gekennzeichnet, dass**
der Tragarm (8) über das erste und zweite Stützelement (2, 4) am Achskörper (6) im wesentlichen aufliegt, wobei der Verstärkungsbereich (10, 12) jeweils als Auflager für den Tragarm (8) ausgebildet ist, um die vom Tragarm (8) ausgeübte Kraft auf die Verstärkungsbereiche (10, 12) des ersten und zweiten Stützelements (2, 4) zu übertragen, und
wobei das erste und zweite Stützelement (2, 4) derart am Achskörper (6) angeordnet sind, dass diese den Achskörper (6) im wesentlichen umschließen und die Kontaktbereiche (14, 16) zwischen dem ersten und zweiten Stützelement (2, 4) im wesentlichen vertikal ausgerichtet sind.

13. Fahrzeugachsensysteme nach Anspruch 12, wobei der Tragarm (8) lediglich an den Verstärkungsbereichen (14, 16) des ersten und zweiten Stützelements (2, 4) aufliegt.

14. Fahrzeugachsensystem nach einem der Ansprüche 12 oder 13, wobei zumindest eines der ersten und zweiten Stützelemente (2, 4) mit dem Achskörper (6) unter dem Kontaktbereich mit dem Tragarm (8) verschweißt ist.

## Claims

1. Connection system for connecting a supporting arm (8) to an axle body (6), especially for a utility vehicle, comprising
a first and a second supporting element (2, 4), by means of which the supporting arm (8) may lie or rest on the axle body (6) and each supporting element having a respective reinforced region (10, 12), which is designed as a seat for the supporting arm (8), in order to transmit the force exerted by the supporting arm (8) to the reinforced regions (10, 12) of the first and second supporting element (2, 4), wherein the first and second supporting element (2, 4) can be arranged on the axle body (6) in such a way that they essentially enclose the axle body (6), and the contact regions (14, 16) between the first and second supporting element (2, 4) are arranged in an essentially vertical manner.

2. Connection system according to claim 1, wherein the contact regions (14, 16) between first and second supporting element (2, 4) are arranged in a region of essentially up to 40 degrees about the vertical axis of symmetry (X), preferably essentially up to 25 degrees, and especially preferably essentially up to 10 degrees.

3. Connection system according to one of the preceding claims, wherein the reinforcement regions (10, 12) of the first and second supporting element (2, 4) are configured as an enlargement of the cross-sectional surface.

4. Connection system according to claim 3, wherein the cross-sectional surface of the reinforced regions (10, 12) has an essentially trapezoidal configuration, whose tapering region is preferably directed outward.

5. Connection system according to claim 3, wherein the cross-sectional surface of the reinforced regions (10, 12) has an essentially triangular configuration, whose tapering region is preferably directed outward.

6. Connection system according to one of the preceding claims, wherein the first and second supporting element (2, 4) have an essentially curved inner surface configuration, which is configured essentially complementary or shape-complementary to an essentially curved outer surface configuration of the axle body (6).

7. Connection system according to one of the preceding claims, wherein the first and second supporting element (2, 4) are configured separately.

8. Connection system according to one of claims 1-6, wherein the first and second supporting element (2, 4) are configured as single parts or single pieces, preferably in the form of an essentially cylindrical pipe.

9. Connection system according to one of the preceding claims, wherein at least one of the supporting elements (4) has a positioning or installation means (18; 26), which is designed to engage with the supporting arm (8) in positive and/or negative locking.

10. Connection system according to claim 9, wherein the positioning or installation means is configured as a projection (18), which is designed to engage in a preferably essentially shape-complementary recess of the supporting arm (8).

11. Connection system according to claim 9, wherein the positioning or installation means is configured as a separate positioning or installation element (26), which is designed to engage in a preferably essentially shape-complementary recess of the supporting arm (8) and in a preferably essentially shape-complementary recess of at least one of the supporting elements (4).

12. Vehicle axle system, especially for utility vehicles, comprising a supporting arm (8),
an axle body (6), and
a first and a second supporting element (2, 4), each having a respective reinforced region (10, 12), **characterized in that**
the supporting arm (8) via the first and second supporting element (2, 4)essentially lies on the axle body (6), wherein the reinforced region (10, 12) is designed as a respective seat for the supporting arm (8) in order to transmit the force exerted by the supporting arm (8) to the reinforced regions (10, 12) of the first and second supporting element (2, 4), and
wherein the first and the second supporting element (2, 4) are arranged on the axle body (6) in such a way that they essentially enclose the axle body (6), and the contact regions (14, 16) between the first and second supporting element (2, 4) are oriented in an essentially vertical manner.

13. Vehicle axle system according to claim 12, wherein the supporting arm (8) lies only on the reinforced regions (14, 16) of the first and second supporting element (2, 4).

14. Vehicle axle system according to one of claims 12 or 13, wherein at least one of the first and second supporting elements (2, 4) is welded to the axle body (6) underneath the contact region with the supporting arm (8).

## Revendications

1. Système de jonction pour la jonction d'un bras porteur (8) avec un corps d'essieu (6), en particulier d'un véhicule utilitaire, comprenant
un premier et un second élément de soutien (2, 4), via lesquels le bras porteur (8) peut reposer sur le corps d'essieu (6) et qui comprennent chacun une zone de renforcement (10, 12), laquelle est réalisée sous forme d'appui pour le bras porteur (8) afin de transmettre la force exercée par le bras porteur (8) sur les zones de renforcement (10, 12) du premier et du second élément de soutien (2, 4),
dans lequel le premier et le second élément de soutien (2, 4) peuvent être agencés sur le corps d'essieu (6) de telle manière que ceux-ci enferment sensiblement le corps d'essieu (6) et les zones de contact (14, 16) entre le premier et le second élément de soutien (2, 4) sont agencées essentiellement verticalement.

2. Système de jonction selon la revendication 1, dans lequel les zones de contact (14, 16) entre le premier et le second élément de soutien (2, 4) sont agencées dans une région allant sensiblement jusqu'à 40° autour de l'axe de symétrie verticale (X), de préférence jusqu'à 25° et de façon particulièrement préférée sensiblement jusqu'à 10°.

3. Système de jonction selon l'une des revendications précédentes, dans lequel les zones de renforcement (10, 12) du premier et du second élément de soutien (2, 4) sont réalisées sous la forme d'un agrandissement de la surface de section transversale.

4. Système de jonction selon la revendication 3, dans lequel la surface de section transversale des zones de renforcement (10, 12) présente une configuration sensiblement de forme trapézoïdale, dont la zone qui va en se rétrécissant est orientée de préférence vers l'extérieur.

5. Système de jonction selon la revendication 3, dans lequel la surface de section transversale des zones de renforcement (10, 12) présente une configuration sensiblement triangulaire, dont la zone qui va en se rétrécissant est orientée de préférence vers l'extérieur.

6. Système de jonction selon l'une des revendications précédentes, dans lequel le premier et le second élément de soutien (2, 4) présentent une configuration de surface intérieure sensiblement incurvée, laquelle est réalisée sensiblement avec une forme complémentaire à une configuration de surface extérieure sensiblement incurvée du corps d'essieu (6).

7. Système de jonction selon l'une des revendications précédentes, dans lequel le premier et le second élément de soutien (2, 4) sont réalisés séparément.

8. Système de jonction selon l'une des revendications 1 à 6, dans lequel le premier et le second élément de soutien (2, 4) sont réalisés d'un seul tenant ou d'une seule pièce, de préférence la forme d'un tube sensiblement cylindrique.

9. Système de jonction selon l'une des revendications précédentes, dans lequel l'un au moins des éléments de soutien (4) comprend un moyen de positionnement ou de montage (18 ; 26) qui est conçu pour être en engagement à coopération de formes et/ou à coopération de forces avec le bras porteur (8).

10. Système de jonction selon la revendication 9, dans lequel le moyen de positionnement ou de montage est réalisé sous forme de saillie (18), laquelle est conçue pour s'engager dans un ressaut, de préférence de forme sensiblement complémentaire, du bras porteur (8).

11. Système de jonction selon la revendication 9, dans lequel le moyen de positionnement ou de montage est réalisé sous forme d'élément de positionnement ou de montage (26) séparé, lequel est conçu pour s'engager dans un ressaut, de préférence de forme sensiblement complémentaire, du bras porteur (8) et dans un ressaut, de préférence de forme sensiblement complémentaire, de l'un au moins des éléments de soutien (4).

12. Système d'essieu de véhicule, en particulier pour véhicule utilitaire, comprenant un bras porteur (8) et
un premier et un second élément de soutien (2, 4) qui présentent respectivement une zone de renforcement (10, 12),
**caractérisé en ce que**
le bras porteur (8) repose sensiblement sur le corps d'essieu (6) via le premier et le second élément de soutien (2, 4), et dans lequel la zone de renforcement (10, 12) est réalisée respectivement à titre d'appui pour le bras porteur (8), afin de transmettre la force exercée par le bras porteur (8) aux zones de renforcement (10, 12) du premier et du second élément de soutien (2, 4), et
dans lequel le premier et le second élément de soutien (2, 4) sont agencés sur le corps d'essieu (6) de telle manière que ceux-ci enferment sensiblement le corps d'essieu (6) et les zones de contact (14, 16) entre le premier et le second élément de soutien (2, 4) sont agencées essentiellement verticalement.

13. Système d'essieu de véhicule selon la revendication 12, dans lequel le bras porteur (8) repose uniquement sur les zones de renforcement (14, 16) du premier et du second élément de soutien (2, 4).

14. Système d'essieu de véhicule selon l'une des revendications 12 ou 13, dans lequel l'un au moins du premier et du second élément de soutien (2, 4) est soudé avec le corps d'essieu (6) au-dessous de la zone de contact avec le bras porteur (8).
